# EUROPEAN PATENT SPECIFICATION

(11) **EP 1 445 117 B1**
(45) Date of publication and mention of the grant of the patent: **25.05.2005**
(21) Application number: 03002061.4
(22) Date of filing: 29.01.2003
(51) Int. Cl.: B41M 1/24, B41M 3/00, B29C 45/14

(54) **Method for producing an in-mould decorated, injection moulded article**
Verfahren zur Herstellung eines in der Form dekorierten Spritzgussformteils
Procédé pour la fabrication d'un article moulé par injection, decoré dans le moule

(43) Date of publication of application: 11.08.2004
(73) Proprietor: TAIYI Precision Tech Corp., Taipei County (TW)
(72) Inventor: Huang, Jui Peng, Taipei County (TW)
(74) Representative: Viering, Jentschura & Partner

(56) References cited:
- EP-A- 1 188 534
- US-A1- 2002 058 144
- PATENT ABSTRACTS OF JAPAN vol. 2000, no. 13, 5 February 2001 (2001-02-05) & JP 2000 280283 A (DAINIPPON PRINTING CO LTD), 10 October 2000 (2000-10-10)
- PATENT ABSTRACTS OF JAPAN vol. 016, no. 471 (M-1318), 30 September 1992 (1992-09-30) & JP 04 168087 A (TOPPAN PRINTING CO LTD), 16 June 1992 (1992-06-16)

## Description

The present invention relates to a printing technology and, more particularly, to a combination printing method for IMD (In-Mold Decoration) hot press and injection molding application.

Conventional IMD (In-Mold Decoration) printing methods include screen-printing, spray-painting, and direct injection-molding. Few IMD printing providers accept the method of screen-printing because the printing speed of the method of screen-printing is slow (about 2000 runs per hour), and not suitable for rapid output. The method of spray-printing is complicated. After the application of each color of paint and before the application of a next color of paint, the workpiece must be dried by baking or with the radiation of a UV lamp. The method of direct injection-molding is the most popularly accepted printing method. According to this direct injection-molding printing method, the desired color pigment is added to the material before IMD hot pressing and injection molding. However, because only one single color is provided each time, this method cannot produce a versatile color pattern.

### SUMMARY OF THE INVENTION

The present invention has been accomplished to provide a combination printing for IMD (In-Mold Decoration) hot press and injection molding application, which eliminates the drawbacks of the prior art printing methods. According to the present invention, the combination printing method comprises the steps of (1) offset printing; (2) color pattern offset printing; (3) primary screen printing; (4) primary baking; (5) secondary screen printing; (6) secondary baking; (7) hot pressing; (8) shape rolling; and (9) injection-molding. By means of the performance of the aforesaid steps and the application of specially prepared compound ink, rapid printing output with versatile printing pattern is achieved.

### BRIEF DESCRIPTION OF THE DRAWINGS

FIG. 1 is a block diagram explaining the procedures of a combination printing method according to the present invention.
FIG. 2 is a block diagram of an alternate form of the present invention.

### DETAILED DESCRIPTION OF THE PREFERRED EMBODIMENT

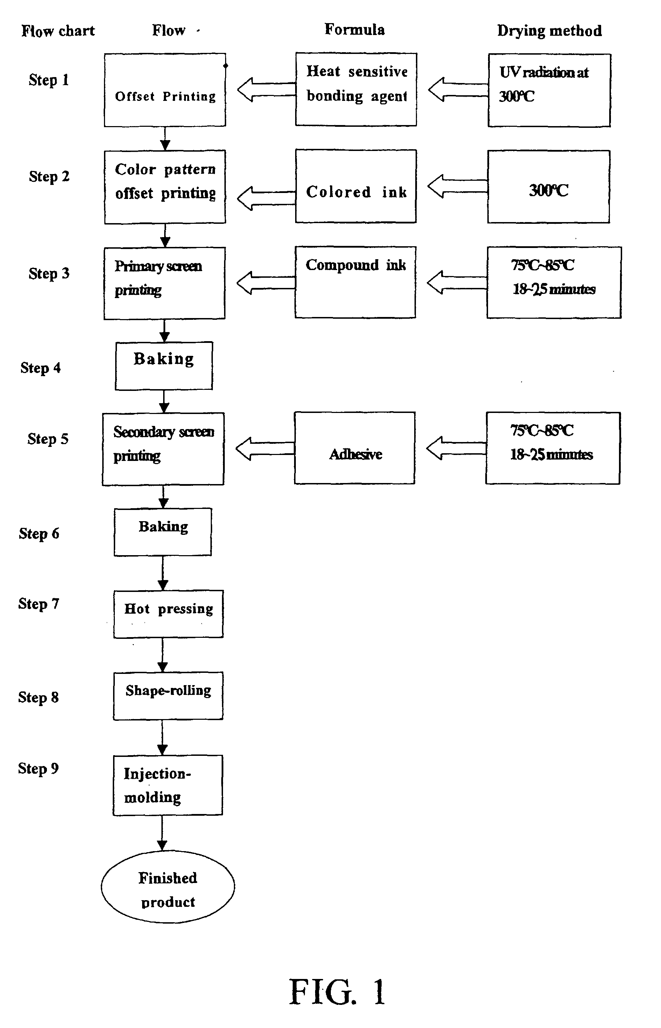

Referring to FIG. 1, the invention comprises the steps of (1) offset printing; (2) color pattern offset printing; (3) primary screen printing; (4) primary baking; (5) secondary screen printing; (6) secondary baking; (7) hot pressing; (8) shape rolling; and (9) injection-molding.

At first, use an offset printer to print a transparent heat sensitive bonding agent on a single piece of film material. The transparent heat sensitive bonding agent is for enabling the printing ink to be used in a further printing procedure to become compatible to the film material. During the offset printing procedure, the heat sensitive bonding agent is dried by the radiation of UV of the offset printer at 300°C.

After the first procedure of offset printing, the offset printer is operated again to print a color printing on the layer of bonding agent at the single piece of film material subject to a predetermined color pattern, and to apply a UV radiation at 300°C to the color printing.

After the second procedure of color-pattern offset printing, use a screen printing machine to print a compound ink on the color printing of the single piece of film material thus obtained from the aforesaid second procedure of color-pattern offset printing, which compound ink is obtained from the mixture of printing ink, heat sensitive bonding agent, hardening agent, and adhesive. After the third procedure of primary screen printing, the printed single piece of film material is baked to a dry status at about 75°∼85° for about 18∼25 minutes. The drying temperature and time are determined subject to the material and thickness of the single piece of film material and the nature of the compound ink.

After the fourth procedure of primary baking, use the screen printing machine to print a layer of adhesive on the layer of compound ink of the single piece of film material for enabling the single piece of film material to be adhered to the workpiece during the further injection-molding procedure.

After the fifth procedure of secondary screen printing, the printed single piece of film material is baked to a dry status at about 75°∼85° for about 18∼25 minutes. The drying temperature and time are determined subject to the material and thickness of the single piece of film material and the nature of the compound ink.

After the sixth procedure of secondary baking, the well-dried single piece of film material thus obtained is put in the steel die of a hot press and shape-formed. After cooling of the steel die, a semi-finished product is obtained.

After the seventh procedure of hot pressing, the semi-finished product is put in an injection molding machine and injection-molded with plastics to form the desired finished product.

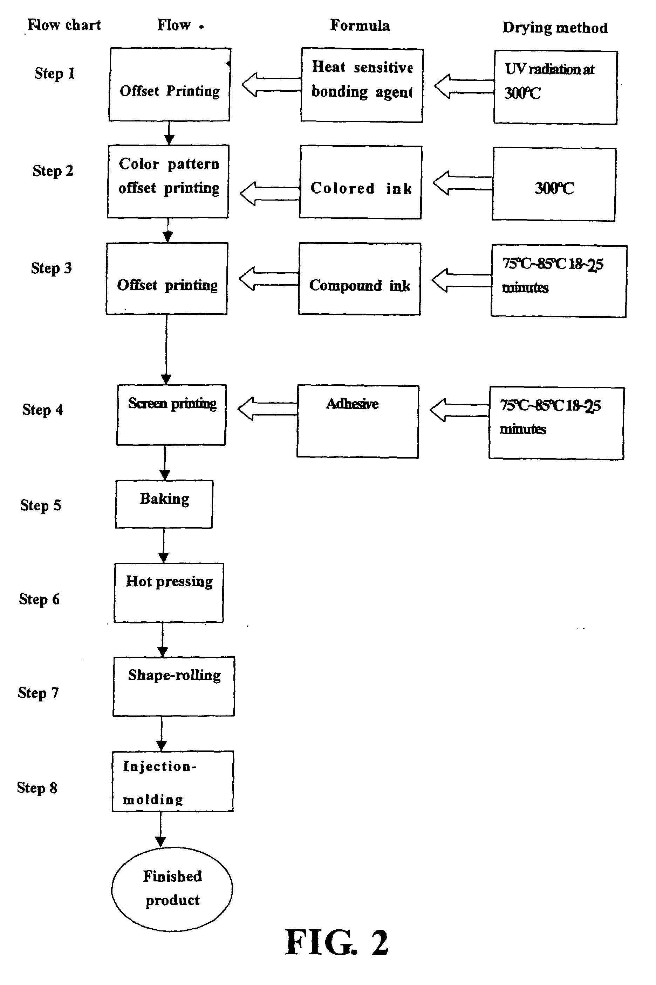

FIG. 2 shows an alternate form of the present invention. According to this alternate form, an offset printing procedure is used to print the prepared compound ink on the color pattern-printed single piece of film material instead of the third procedure of primary screen printing and fourth procedure of baking of the aforesaid first embodiment of the present invention, i.e., this alternate form comprises the steps of (1) offset printing where a transparent heat sensitive bonding agent is printed on a single piece of film material and radiated with UV light at about 300°C; (2) color pattern offset printing where a color printing is printed on the bonding agent of the single piece of film material and radiated with UV light at about 300°C; (3) offset printing where a compound ink is printed on the color printing of the single piece of film material and baked to a dry status at about 75°∼85° for about 18-25 minutes; (4) screen printing where an adhesive is printed on the layer of compound ink of the single piece of film material; (5) baking at about 75°∼85° for about 18∼25 minutes; (6) hot pressing; (7) shape rolling; and (8) injection-molding.

A prototype of combination printing method has been constructed with the features of FIGS. 1-2. The combination printing method functions smoothly to provide all of the features discussed earlier.

## Claims

1. A combination printing method comprising the steps of:
(a) offset printing where a single piece of film material is prepared and a transparent heat sensitive bonding agent is printed on the prepared single piece of film material through an offset printer;
(b) color pattern offset printing where a color printing is printed on the layer of bonding agent of the single piece of film material thus obtained through an offset printer;
(c) primary screen printing where a compound ink prepared from the mixture of printing ink and bonding agent is printed on the color printing of the single piece of film material thus obtained through a silk screen and then dried by baking;
(d) secondary screen printing where an adhesive is printed on the layer of compound ink of the single piece of film material thus obtained through a silk screen and then dried by baking;
(e) hot pressing where the printed single piece of film material thus obtained is put in the steel die of a hot press and pressed to form a semi-finished product'
(f) shape rolling where the semi-finished produce is shape-rolled through a shape rolling machine; and
(g) injection-molding where the shape-rolled semi-finished product thus obtained is injection-molded with plastics into the desired finished product.

2. The combination printing method as claimed in claim 1 wherein said compound ink is comprised of UV ink, transparent heat sensitive bonding agent, hardening agent, and adhesive.

3. The combination printing method as claimed in claim 1 wherein said transparent heat sensitive bonding agent is dried with the application of UV radiation during the step (a) offset printing.

4. The combination printing method as claimed in claim 1 wherein said color printing is dried with the application of UV radiation during the step (b) color pattern offset printing.

5. The combination printing method as claimed in claim 1 wherein said compound ink is dried by baking at about 75°∼85°C for about 18∼25 minutes during the step (c) primary screen printing.

6. The combination printing method as claimed in claim 1 wherein said adhesive is dried by baking at about 75°∼85°C for about 18∼25 minutes during the step (d) secondary screen printing.

7. A combination printing method comprising the steps of:
(a) primary offset printing where a single piece of film material is prepared and a transparent heat sensitive bonding agent is printed on the prepared single piece of film material through an offset printer;
(b) color pattern offset printing where a color printing is printed on the layer of bonding agent of the single piece of film material thus obtained;
(c) posterior offset printing where a compound ink prepared from the mixture of printing ink and bonding agent is printed on the color printing of the single piece of film material through an offset printer thus obtained and then dried by baking;
(d) screen printing where an adhesive is printed on the layer of compound ink of the single piece of film material thus obtained through a silk screen and then dried by baking;
(e) hot pressing where the printed single piece of film material thus obtained is put in the steel die of a hot press and pressed to form a semi-finished product'
(f) shape rolling where the semi-finished produce is shape-rolled through a shape rolling machine; and
(g) injection-molding where the shape-rolled semi-finished product thus obtained is injection-molded with plastics into the desired finished product.

8. The combination printing method as claimed in claim 7 wherein said compound ink is comprised of UV ink, transparent heat sensitive bonding agent, hardening agent, and adhesive.

9. The combination printing method as claimed in claim 7 where n said transparent heat sensitive bonding agent is dried with the application of UV radiation during the step (a) offset printing.

10. The combination printing method as claimed in claim 7 wherein said color printing is dried with the application of UV radiation during the step (b) color pattern offset printing.

11. The combination printing method as claimed in claim 7 wherein said compound ink is dried by baking at about 300°C for about 18∼25 minutes during the step (c) posterior offset printing.

12. The combination printing method as claimed in claim 7 wherein said adhesive is dried by baking at about 75°∼85°C for about 18∼25 minutes during the step (d) screen printing.

## Patentansprüche

1. Kombiniertes Druckverfahren
**gekennzeichnet durch**
die Verfahrensschritte:
a) Offsetdrucken mittels eines Offsetdruckers, wobei ein einzelnes Stück eines Filmmaterials vorbereitet und ein transparentes wärmeempfindliches Bindemittel auf das vorbereitete einzelne Stück Filmmaterial gedruckt wird;
b) Offsetdrucken eines Farbmusters mittels eines Offsetdruckers, wobei auf die Schicht des Bindemittels des einzelnen Stückes Filmmaterials ein Farbdruck gedruckt wird;
c) Primärsiebdrucken mittels einer Siebdruckvorrichtung, wobei eine zusammengesetzte Tinte, die aus einer Mischung von Drucktinte und Bindemittel hergestellt wird, auf den Farbdruck auf dem einzelnen Stück Filmmaterial gedruckt wird, und Durchführung einer Trocknung;
d) Sekundärsiebdruck mittels einer Siebdruckvorrichtung, wobei auf die Schicht der zusammengesetzten Tinte auf dem einzelnen Stück Filmmaterial ein Kleber gedruckt und eine Trocknung durchgeführt wird;
e) Warmpressen, wobei das erhaltene bedruckte einzelne Stück Filmmaterial in eine Stahlform einer Warmpresse eingebracht und gepreßt wird, um ein Zwischenprodukt herzustellen;
f) Formwalzen des Zwischenproduktes mittels einer Formwalzmaschine; und
g) Spritzgießen, wobei das formgewalzte Zwischenprodukt mit einem Kunststoff zum gewünschten fertigen Produkt spritzgegossen wird.

2. Kombiniertes Druckverfahren nach Anspruch 1,
**dadurch gekennzeichnet,**
**daß** eine zusammengesetzte Tinte verwendet wird, die aus UV-Tinte, transparentem, wärmeempfindlichem Bindemittel, Härter und Kleber besteht.

3. Kombiniertes Druckverfahren nach Anspruch 1,
**dadurch gekennzeichnet ,**
**daß** das transparente, wärmeempfindliche Bindemittel während des Verfahrensschrittes a) des Offsetzdruckens mittels UV-Strahlung bei 300°C getrocknet wird.

4. Kombiniertes Druckverfahren nach Anspruch 1,
**dadurch gekennzeichnet,**
**daß** der Farbdruck während des Verfahrensschrittes b) des Offsetdruckens des Farbmusters durch UV-Strahlung bei 300°C getrocknet wird.

5. Kombiniertes Druckverfahren nach Anspruch 1,
**dadurch gekennzeichnet,**
**daß** die zusammengesetzte Tinte während des Verfahrensschrittes c) des Primärsiebdruckens durch Wärme bei ca. 75°C∼85°C während ca. 18 bis 25 Minuten getrocknet wird.

6. Kombiniertes Druckverfahren nach Anspruch 1,
**dadurch gekennzeichnet,**
**daß** der Kleber während des Verfahrensschrittes d) des Sekundärsiebdruckens durch Wärme bei ca. 75°C∼85°C während ca. 18 bis 25 Minuten getrocknet wird.

7. Kombiniertes Druckverfahren
**gekennzeichnet durch**
die Verfahrensschritte:
a) Primäroffsetdrucken, wobei ein einzelnes Stück eines Filmmaterials vorbereitet und mittels eines Offsetdruckers auf das vorbereitete einzelne Stück Filmmaterial ein transparentes wärmeempfindliches Bindemittel gedruckt wird;
b) Offsetdrucken eines Farbmusters, wobei auf die Schicht des Bindemittels des einzelnen Stückes Filmmaterials ein Farbdruck gedruckt wird;
c) anschließendes Offsetdrucken mittels eines Offsetdruckers, wobei eine zusammengesetzte Tinte aus einer Mischung aus Drucktinte und Bindemittel hergestellt und auf den Farbdruck auf dem einzelnen Stück Filmmaterial gedruckt wird und eine Trocknung **durch** Wärme erfolgt,
d) Siebdrucken mittels einer Siebdruckvorrichtung, wobei auf die Schicht der zusammengesetzten Tinte auf dem einzelnen Stück Filmmaterial ein Kleber gedruckt wird und eine Trocknung **durch** Wärme erfolgt;
e) Warmpressen, wobei das so erhaltene bedruckte einzelne Stück Filmmaterial in eine Stahlform einer Warmpresse eingebracht und gepreßt wird, um ein Zwischenprodukt herzustellen;
f) Formwalzen des Zwischenproduktes mittels einer Formwalzmaschine; und
g) Spritzgießen, wobei das formgewalzte Zwischenprodukt mit einem Kunststoff zum gewünschten fertigen Produkt spritzgegossen wird.

8. Kombiniertes Druckverfahren nach Anspruch 7,
**dadurch gekennzeichnet ,**
**daß** eine zusammengesetzte Tinte verwendet wird, die aus UV-Tinte, transparentem, wärmeempfindlichem Bindemittel, Härter und Kleber besteht.

9. Kombiniertes Druckverfahren nach Anspruch 7,
**dadurch gekennzeichnet,**
**daß** das transparente, wärmeempfindliche Bindemittel während des Verfahrensschrittes a) des Offsetdruckens mittels UV-Strahlung bei 300°C getrocknet wird.

10. Kombiniertes Druckverfahren nach Anspruch 7,
**dadurch gekennzeichnet ,**
**daß** der Farbdruck während des Verfahrensschrittes b) des Offsetdruckens des Farbmusters durch UV-Strahlung bei 300°C getrocknet wird

11. Kombiniertes Druckverfahren nach Anspruch 7,
**dadurch gekennzeichnet ,**
**daß** die zusammengesetzte Tinte während des Verfahrensschrittes d) des anschließenden Offsetdruckens durch Wärme bei ca. 300°C während ca. 18 bis 25 Minuten getrocknet wird.

12. Kombiniertes Druckverfahren nach Anspruch 7,
**dadurch gekennzeichnet,**
**daß** der Kleber während des Verfahrensschrittes d) des Siebdruckens durch Wärme bei ca. 75°C∼85°C während ca. 18 bis 25 Minuten getrocknet wird.

## Revendications

1. Procédé d'impression composite comprenant les étapes :
(a) d'impression offset, dans laquelle une pièce unique de matériau en film est préparée et un agent liant transparent thermosensible est imprimé sur la pièce unique de matériau en film préparée par l'intermédiaire d'une machine d'impression offset ;
(b) d'impression offset d'un motif en couleurs, dans laquelle une impression couleur est imprimée sur la couche d'agent liant de la pièce unique de matériau en film ainsi obtenue par l'intermédiaire d'une machine d'impression offset ;
(c) d'impression sérigraphique primaire, dans laquelle une encre composite préparée à partir du mélange d'encre d'impression et d'agent liant est imprimée par l'intermédiaire d'un écran sérigraphique sur l'impression couleur de la pièce unique de matériau en film ainsi obtenue, puis séchée par cuisson ;
(d) d'impression sérigraphique secondaire, dans laquelle un adhésif est imprimé par l'intermédiaire d'un écran sérigraphique sur la couche d'encre composite de la pièce unique de matériau en film ainsi obtenue, puis séché par cuisson ;
(e) de pressage à chaud, dans laquelle la pièce unique de matêriau en film imprimée ainsi obtenue est déposée dans la matrice en acier d'une presse à chaud et pressée de façon à former un produit semi-fini ;
(f) de mise en forme par roulage, dans laquelle le produit semi-fini est mis en forme par roulage par l'intermédiaire d'une machine de mise en forme par roulage ; et
(g) de moulage par injection, dans laquelle le produit semi-fini mis en forme par roulage ainsi obtenu est moulé par injection avec une matière plastique pour former le produit fini souhaité.

2. Procédé d'impression composite selon la revendication 1, **caractérisé en ce que** ladite encre composite est composée d'une encre sensible aux UV, d'un agent liant transparent thermosensible, d'un agent de durcissement et d'un adhésif.

3. Procédé d'impression composite selon la revendication 1, **caractérisé en ce que** ledit agent liant transparent thermosensible est séché par application d'un rayonnement UV à 300°C pendant l'étape (a) d'impression offset.

4. Procédé d'impression composite selon la revendication 1, **caractérisé en ce que** ladite impression couleur est séchée par application d'un rayonnement UV à 300°C pendant l'étape (b) d'impression offset d'un motif en couleurs.

5. Procédé d'impression composite selon la revendication 1, **caractérisé en ce que** ladite encre composite est séchée par cuisson à environ 75°C∼85°C pendant environ 18 à 25 minutes pendant l'étape (c) d'impression sérigraphique primaire.

6. Procédé d'impression composite selon la revendication 1, **caractérisé en ce que** ledit adhésif est séché par cuisson à environ 75°C∼85°C pendant environ 18 à 25 minutes pendant l'étape (d) d'impression sérigraphique secondaire.

7. Procédé d'impression composite **caractérisé en ce qu'**il comprend les étapes :
(a) d'impression offset primaire, dans laquelle une pièce unique de matériau en film est préparée et un agent liant transparent thermosensible est imprimé par l'intermédiaire d'une machine d'impression offset sur la pièce unique de matériau en film préparée ;
(b) d'impression offset d'un motif en couleurs, dans laquelle une impression couleur est imprimée sur la couche d'agent liant de la pièce unique de matériau en film ainsi obtenue ;
(c) d'impression offset postérieure, dans laquelle une encre composite préparée à partir du mélange d'encre d'impression et d'agent liant est imprimée par l'intermédiaire d'une machine d'impression offset sur l'impression couleur de la pièce unique de matériau en film ainsi obtenue, puis séchée par cuisson ;
(d) d'impression sérigraphique, dans laquelle un adhésif est imprimé par l'intermédiaire d'un écran sérigraphique sur la couche d'encre composite de la pièce unique de matériau en film ainsi obtenue, puis séché par cuisson ;
(e) de pressage à chaud, dans laquelle la pièce unique de matériau en film imprimée ainsi obtenue est déposée dans la matrice en acier d'une presse à chaud et pressée de façon à former un produit semi-fini ;
(f) de mise en forme par roulage, dans laquelle le produit semi-fini est mis en forme par roulage par l'intermédiaire d'une machine de mise en forme par roulage ; et
(g) de moulage par injection, dans laquelle le produit semi-fini mis en forme par roulage ainsi obtenu est moulé par injection avec une matière plastique pour former le produit fini souhaité.

8. Procédé d'impression composite selon la revendication 7, **caractérisé en ce que** ladite encre composite est composée d'une encre sensible aux UV, d'un agent liant transparent thermosensible, d'un agent de durcissement et d'un adhésif.

9. Procédé d'impression composite selon la revendication 7, **caractérisé en ce que** ledit agent liant transparent thermosensible est séché par application d'un rayonnement UV à 300°C pendant l'étape (a) d'impression offset.

10. Procédé d'impression composite selon la revendication 7, **caractérisé en ce que** ladite impression couleur est séchée par application d'un rayonnement UV à 300°C pendant l'étape (b) d'impression offset d'un motif en couleurs.

11. Procédé d'impression composite selon la revendication 7, **caractérisé en ce que** ladite encre composite est séchée par cuisson à environ 300°C pendant environ 18 à 25 minutes pendant l'étape (c) d'impression sérigraphique postérieure.

12. Procédé d'impression composite selon la revendication 7, **caractérisé en ce que** ledit adhésif est séché par cuisson à environ 75°C∼85°C pendant environ 18 à 25 minutes pendant l'étape (d) d'impression sérigraphique.
